# EUROPÄISCHE PATENTANMELDUNG

(11) **EP 4 112 967 A1**
(43) Veröffentlichungstag der Anmeldung: **04.01.2023**
(21) Anmeldenummer: 21305887.8
(22) Anmeldetag: 28.06.2021
(51) Int. Cl.: F16F 1/373, F16F 1/376, F16F 1/377, B60R 16/02, F16L 55/033

(54) **SCHWINGUNGSDÄMPFER**

(71) Anmelder: Nexans, 92400 Courbevoie (FR)
(72) Erfinder: REICH, Alexander, 92685 FLOSS (DE); SEGERER, Stefan, 92685 FLOSS (DE)
(74) Vertreter: Ipsilon

(57) **Zusammenfassung**

Es wird ein Schwingungsdämpfer mit zwei Dämpferhälften vorgeschlagen, die im zusammengebauten Zustand eine Durchlassöffnung umschließen und in Einbaulage an einer Komponente anliegen, die durch die Durchlassöffnung geführt ist. Die Dämpferhälften weisen korrespondierende Rastmittel auf, die ein Anbringen des Schwingungsdämpfers an der Komponente gestatten. Jede Dämpferhälfte weist jeweils einen Kragen auf, die im zusammengebauten Zustand des Schwingungsdämpfers an gegenüberliegenden Enden des Schwingungsdämpfers angeordnet sind. Der Schwingungsdämpfer lässt sich einfach, auch nachträglich, montieren. Außerdem ist der Schwingungsdämpfer auch wieder beschädigungsfrei lösbar.

## Beschreibung

### Gebiet

Die Erfindung betrifft einen Schwingungsdämpfer und insbesondere einen Schwingungsdämpfer zur Dämpfung von mechanischen Schwingungen in einem Kabelbaum eines Kraftfahrzeugs.

### Hintergrund

Im Folgenden ist unter dem Begriff "Schwingung" stets eine mechanische Schwingung eines Bauteils oder eine akustische Schwingung in der Luft zu verstehen, die durch ein schwingendes Bauteil angeregt wird.

Im Betrieb eines Kraftfahrzeuges treten mechanische Schwingungen unterschiedlicher Frequenzen auf, die beispielsweise im Betrieb eines Verbrennungsmotors entstehen. Schwingungen können aber auch durch das Abrollen von Rädern eines Fahrzeuges auf einem Untergrund verursacht werden, der nicht vollkommen glatt ist. Diese Schwingungen können in Bauteilen eines Kraftfahrzeuges Resonanzschwingungen erzeugen, die sich bis in den Fahrzeuginnenraum hinein störend bemerkbar machen. Unter anderem können solche störenden Schwingungen auch in Kabelbäumen entstehen, die zur Signal- und/oder Energieübertragung in Kraftfahrzeugen verbaut sind.

Aus der US 2003/0042086 A1 ist ein Schwingungsdämpfer für eine rotierende Welle bekannt. Der Schwingungsdämpfer ist zweiteilig aufgebaut, wobei die Hälften des Schwingungsdämpfers von einem zylindrischen Gehäuse zusammengehalten sind, das außen über die Hälften des Schwingungsdämpfers geschoben ist. Im Inneren der Hälften des Schwingungsdämpfers ist jeweils ein Massekern aus Stahl untergebracht, der von einem Elastomer umhüllt ist. Wegen des zylindrischen Gehäuses kann der Schwingungsdämpfer nicht nachträglich auf einer Welle montiert werden.

Hiervon ausgehend hat die vorliegende Erfindung die Aufgabe, einen einfach zu montierenden Schwingungsdämpfer zu schaffen, um eines oder mehrere der eingangs genannten Probleme zu überwinden oder zumindest zu verbessern.

### Beschreibung der Erfindung

Zur Lösung dieser Aufgabe schlägt die Erfindung nach einem ersten Aspekt einen Schwingungsdämpfer mit zwei Dämpferhälften vor, die im zusammengebauten Zustand eine Durchlassöffnung umschließen und in Einbaulage an einer Komponente anliegen, die durch die Durchlassöffnung geführt ist. Die Dämpferhälften weisen korrespondierende Rastmittel auf, die ein Anbringen des Schwingungsdämpfers an der Komponente gestatten. Jede Dämpferhälfte weist jeweils einen Kragen auf, die im zusammengebauten Zustand des Schwingungsdämpfers an gegenüberliegenden Enden des Schwingungsdämpfers angeordnet sind.

Die Kragen ermöglichen die Fixierung des Schwingungsdämpfers auf der Komponente zum Beispiel mit Kabelbindern. Diese Art der Fixierung hat den Vorteil, dass kein Gehäuse oder Ähnliches notwendig ist, um die Dämpferhälften an einem Einbauort zusammenzuhalten. Die Dämpferhälften ermöglichen weiterhin, dass zum Beispiel in älteren Fahrzeugen eine Nachrüstung mit dem erfindungsgemäßen Schwingungsdämpfer ermöglicht ist. Weiterhin kann der Schwingungsdämpfer auch beschädigungsfrei wieder gelöst werden. Der Schwingungsdämpfer sorgt dafür, dass störende Schwingungen und die dadurch verursachten Geräusche unterdrückt werden. Insbesondere bei Anwendungsfällen in Fahrzeugen ist das eine besonders gewünschte Eigenschaft.

Bei einer vorteilhaften Weiterbildung des Schwingungsdämpfers weist der an den Dämpferhälften angeordnete Kragen ein und vorzugsweise zwei Fenster auf.

Durch die Fenster lässt sich bei der Montage ein Band stecken, zum Beispiel ein Kabelbinder, um den Schwingungsdämpfer an seinem Einbauort zu fixieren. Der Kabelbinder ist auf diese Weise auch zerstörungsfrei wieder lösbar.

Bei einer Weiterbildung des Schwingungsdämpfers weist jede Dämpferhälfte jeweils zwei Kragen auf, wobei einer der Kragen in axialer Richtung des Schwingungsdämpfers länger als der andere Kragen ist.

Mit Vorteil sind an dem längeren Kragen Rasthaken angeordnet.

Bei einer zweckmäßigen Weiterbildung des Schwingungsdämpfers greifen im zusammengebauten Zustand des Schwingungsdämpfers die Rasthaken an dem längeren Kragen der einen Dämpferhälfte in Rastöffnungen der anderen Dämpferhälfte ein, die in dem kürzeren Kragen vorgesehen sind.

Vorteilhafter Weise können die Dämpferhälften jeweils einen zentralen Abschnitt aufweisen, an dem paarweise Rasthaken und Rastöffnungen vorgesehen sind.

Die Rasthaken und Rastöffnungen bilden gemeinsam Rastmittel, die es gestatten, die Dämpferhälften an einer gewünschten Stelle miteinander zu verrasten und den Schwingungsdämpfer an dieser Stelle auf der Komponente anzubringen. Ein Monteur hat dann die Hände frei, um den Schwingungsdämpfer zum Beispiel mittels Kabelbindern, die durch Durchbrüche in den langen Kragen geführt und um die Komponente herum gelegt werden, abschließend zu fixieren. Bei anderen Ausführungsbeispielen sind andere Rastmittel oder andere Verbindungsmittel vorgesehen, die ein Anbringen des Schwingungsdämpfers erlauben, so dass die Dämpferhälften sich nicht wieder voneinander lösen und ohne Schwierigkeit beispielsweise mit einem Kabelbinder auf der Komponente fixierbar sind. Andere Verbindungsmittel anstelle der Rastmittel können zum Beispiel Klebeflächen auf der Innenseite der Dämpferhälften sein.

Bei einer vorteilhaften Ausführungsform des Schwingungsdämpfers weist mindestens eine der Dämpferhälften einen Kern aus Metall auf, der mit einer Kunststoffumspritzung versehen ist, insbesondere aus thermoplastischem Kunststoff.

Die Umspritzung mit dem thermoplastischen Kunststoff schützt die Komponente vor Abrieb durch den Schwingungsdämpfer.

### Kurze Beschreibung der Zeichnung

Nachfolgend wird die Erfindung anhand von zwei Ausführungsformen unter Bezugnahme auf die begleitenden Figuren exemplarisch näher erläutert. Alle Figuren sind rein schematisch und nicht maßstäblich. Es zeigen:
- Fig. 1: eine perspektivische Ansicht eines Ausführungsbeispiels eines erfindungsgemäßen Schwingungsdämpfers;
- Fig. 2: eine Explosionsdarstellung des Schwingungsdämpfers aus Fig. 1;
- Fig. 3: eine perspektivische Ansicht von Dämpferhälften des Schwingungsdämpfers aus Fig. 1;
- Fig. 4A: eine Draufsicht auf eine Innenseite einer Dämpferhälfte aus Figur 3;
- Fig 4B: ein Querschnitt durch die Dämpferhälfte aus Figur 4A;
- Fig. 4C: eine Draufsicht auf eine Innenseite einer Dämpferhälfte einer anderen Ausführungsform eines erfindungsgemäßen Schwingungsdämpfers; und
- Fig 4D: ein Querschnitt durch die Dämpferhälfte aus Figur 4C.

Gleiche oder ähnliche Elemente sind in den Figuren mit gleichen oder ähnlichen Bezugszeichen versehen.

### Ausführungsbeispiel

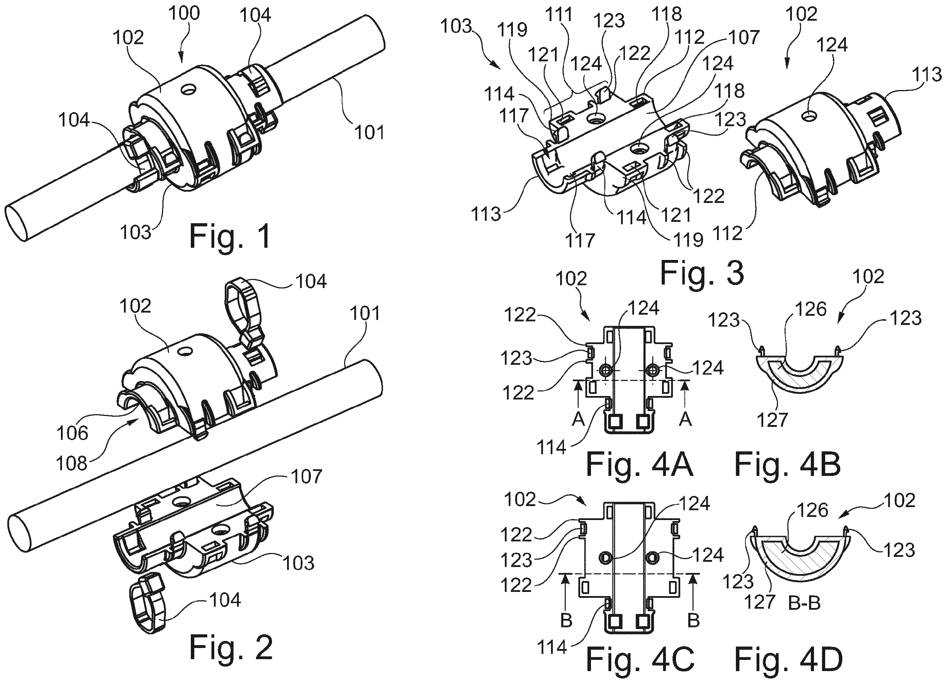

Figur 1 zeigt eine perspektivische Ansicht eines Ausführungsbeispiels eines erfindungsgemäßen Schwingungsdämpfers 100. Der Schwingungsdämpfer ist auf einer elektrischen Leitung 101 angeordnet, die in der Figur 1 vereinfacht als Stab dargestellt ist. An die Stelle der Leitung 101 könnte bei einem anderen Ausführungsbeispiel ein Kabelbaum oder ein anderes längliches Bauteil treten. Der Schwingungsdämpfer 100 umfasst eine erste Dämpferhälfte 102 und eine zweite Dämpferhälfte 103, welche die Leitung 101 umschließen. Die Dämpferhälften 102,103 werden durch Kabelbinder 104 auf der Leitung 101 fixiert. Die Längserstreckung der Leitung 101 definiert eine Richtung, die im Folgenden als axiale Richtung bezeichnet ist.

In Figur 2 ist der Schwingungsdämpfer 100 in einer Explosionsdarstellung gezeigt. In Figur 2 ist sichtbar, dass die Dämpferhälften 102,103 im Wesentlichen eine halbzylindrische Gestalt haben. Die Dämpferhälften 102,103 weisen innere Mantelflächen 106,107 auf, die im zusammengebauten Zustand des Schwingungsdämpfers 100 an einem Außenumfang der Leitung 101 anliegen.

Figur 3 zeigt eine perspektivische Ansicht der Dämpferhälften 102, 103, deren Aufbau identisch ist. Deshalb wird im Folgenden nur die Dämpferhälfte 103 stellvertretend für beide Dämpferhälften 102,103 beschrieben. Die Dämpferhälfte 103 weist einen zentralen Abschnitt 111 auf, an den sich auf der einen Seite ein kurzer halbkreisförmiger Kragen 112 und auf der anderen Seite ein langer halbkreisförmiger Kragen 113 anschließt. An den zentralen Abschnitt 111 angrenzend sind an dem langen Kragen 113 Rasthaken 114 angeordnet. An der von dem zentralen Abschnitt 111 abliegenden Ende sind in dem langen Kragen 113 zwei einander gegenüberliegende Durchbrüche 117 ausgebildet. In dem kurzen Kragen 112 sind angrenzend an den zentralen Abschnitt 111 Rastöffnungen 118 vorgesehen.

In dem zentralen Abschnitt 111 sind ein Paar von Vorsprüngen 119 ausgebildet, die an den langen Kragen 113 angrenzen und mit Rastöffnungen 121 versehen sind. Benachbart zu dem kurzen Kragen 112 sind an dem zentralen Abschnitt 111 auf jeder Seite der Dämpferhälfte 103 zwei vorspringende Laschen 122 vorgesehen zwischen denen jeweils ein Rasthaken 123 angeordnet ist. Die Dämpferhälfte 103 weist Öffnungen 124 auf, deren Funktion mit Bezug auf die Figuren 4A und 4B erläutert wird.

Die Dämpferhälfte 103 ist in Figur 3 in einer Ansicht auf dessen Innenseite dargestellt, während der Betrachter auf die Außenseite der Dämpferhälfte 102 blickt. Bei der Montage des Schwingungsdämpfers auf der Leitung 101 werden die Dämpferhälften 102,103 so aufeinandergelegt, dass der kurze Kragen 112 der Dämpferhälfte 102 auf dem langen Kragen 113 der Dämpferhälfte 103 zu liegen kommt und der lange Kragen 113 der Dämpferhälfte 102 auf dem kurzen Kragen 112 der Dämpferhälfte 103. Dabei greifen jeweils die Rasthaken 114 in die Rastöffnungen 118 und die Rasthaken 123 in die Rastöffnungen 121 ein. Diese Situation ist in Figur 1 dargestellt. Die Rasthaken 114,123 und Rastöffnungen 118,121 bilden gemeinsam Rastmittel, die es gestatten, die Dämpferhälften 102,103 an einer gewünschten Stelle miteinander zu verrasten und den Schwingungsdämpfer an dieser Stelle auf der Leitung 101 anzubringen. Ein Monteur hat dann die Hände frei, um den Schwingungsdämpfer 100 mittels Kabelbindern 104, die durch die Durchbrüche 117 in den langen Kragen 113 geführt und um die Leitung 101 herum gelegt werden, abschließend zu fixieren.

Figur 4A zeigt die Dämpferhälfte 102 in einer Draufsicht auf deren Innenseite und Figur 4B einen Querschnitt durch die in Figur 4A gezeigte Dämpferhälfte 102 entlang der Linie A-A in Figur 4A. In der Dämpferhälfte 102 ist ein Metalleinleger 126 als Massekern angeordnet, der von einem thermoplastischen Kunststoff 127 umspritzt ist. Die Öffnungen 124 in der Dämpferhälfte 102 dienen dem Zweck, den Metalleinleger 126 in einem Spritzgusswerkzeug zu fixieren. Der Metalleinleger 126 ist bei dem beschriebenen Ausführungsbeispiel aus Stahl hergestellt, der mit einem Korrosionsschutz beschichtet ist. Bei anderen Ausführungsbeispielen können auch andere Metalle oder Werkstoffe Verwendung finden, welche eine erwünschte Dichte aufweisen.

Figur 4C zeigt eine andere Ausführungsform der Dämpferhälfte 102, die länger ausgebildet ist als die Dämpferhälfte 102 aus Figur 4A. Figur 4D zeigt entsprechend zu Figur 4B einen Querschnitt durch die in Figur 4C gezeigte Dämpferhälfte 102 entlang der Linie B-B in Figur 4B. Die Dämpferhälfte 102 aus Figur 4C ist nicht nur länger als die Dämpferhälfte aus Figur 4A, sondern der Metalleinleger 126 ist auch dicker als der Metalleinleger 126 der in Figur 4B gezeigten Dämpferhälfte 102 ausgebildet. Durch diese baulichen Änderungen ist der erfindungsgemäßen Schwingungsdämpfer 100 auf einfache Weise skalierbar, d.h. unterschiedliche Größen und Massen des Schwingungsdämpfer 100 können auf einfache Weise realisiert werden, ohne an dem grundsätzlichen Aufbau des Schwingungsdämpfers etwas zu ändern.

Prinzipiell ist es auch möglich mehrere baugleiche oder unterschiedliche Schwingungsdämpfer 100 auf einer Leitung 101 anzuordnen, um damit unterschiedliche Dämpfungseigenschaften zu realisieren.

Für Wartungsarbeiten kann der Schwingungsdämpfer 100 leicht demontiert werden, indem die Kabelbinder 104 getrennt und die Rastverbindungen geöffnet werden. Beispielsweise nach einer Reparatur kann dann derselbe Schwingungsdämpfer problemlos wieder weiterverwendet werden, wobei hierfür eine zerstörungs- und/oder beschädigungsfreie Demontage des Schwingungsdämpfers vorausgesetzt ist.

### Bezugszeichenliste

- 100: Schwingungsdämpfer
- 101: Leitung
- 102,103: Dämpferhälfte
- 104: Kabelbinder
- 106,107: Mantelflächen
- 111: Zentraler Abschnitt
- 112: Kurzer Kragen
- 113: Langer Kragen
- 114: Rasthaken
- 117: Durchbrüche
- 118: Rastöffnungen
- 119: Vorsprünge
- 121: Rastöffnungen
- 122: Laschen
- 123: Rasthaken
- 124: Öffnungen
- 126: Metalleinleger
- 127: Kunststoffumspritzung

## Patentansprüche

1. Schwingungsdämpfer mit zwei Dämpferhälften(102,103), die im zusammengebauten Zustand eine Durchlassöffnung umschließen und in Einbaulage an einer Komponente (101) anliegen, die durch die Durchlassöffnung (108) geführt ist, **dadurch gekennzeichnet, dass** die Dämpferhälften korrespondierende Rastmittel (114,118) aufweisen, die ein Anbringen des Schwingungsdämpfers (100) an der Komponente (101) gestatten, dass jede Dämpferhälfte jeweils einen Kragen (113) aufweist, die im zusammengebauten Zustand des Schwingungsdämpfers an gegenüberliegenden Enden des Schwingungsdämpfers angeordnet sind.

2. Schwingungsdämpfer nach Anspruch 1, **dadurch gekennzeichnet, dass** der an den Dämpferhälften (102,103) angeordnete Kragen (113) ein und vorzugsweise zwei Rastöffnungen (118) aufweist.

3. Schwingungsdämpfer nach Anspruch 1 oder 2, **dadurch gekennzeichnet, dass** jede Dämpferhälfte (102,103) jeweils zwei (112,113) Kragen aufweist, wobei einer der Kragen (113) in axialer Richtung des Schwingungsdämpfers länger als der andere Kragen (112) ist.

4. Schwingungsdämpfer nach Anspruch 3, **dadurch gekennzeichnet, dass** an dem längeren Kragen (113) Rasthaken (114) angeordnet sind.

5. Schwingungsdämpfer nach Anspruch 4, **dadurch gekennzeichnet, dass** im zusammengebauten Zustand des Schwingungsdämpfers (100) die Rasthaken (114) an dem längeren Kragen (113) der einen Dämpferhälfte in Rastöffnungen (118) der anderen Dämpferhälfte eingreifen, die in dem kürzeren Kragen (112) vorgesehen sind.

6. Schwingungsdämpfer nach einem der vorstehenden Ansprüche, **dadurch gekennzeichnet, dass** die Dämpferhälften (102,103) jeweils einen zentralen Abschnitt (111) aufweisen, an dem paarweise Rasthaken (123) und Rastöffnungen (121) vorgesehen sind.

7. Schwingungsdämpfer nach einem der vorstehenden Ansprüche, **dadurch gekennzeichnet, dass** mindestens eine der Dämpferhälften (102) einen Kern (126) aus Metall aufweist, der mit einer Kunststoffumspritzung (127) versehen ist, insbesondere aus thermoplastischem Kunststoff.

## Geänderte Patentansprüche

### Geänderte Patentansprüche gemäss Regel 137(2) EPÜ.

1. Schwingungsdämpfer mit zwei Dämpferhälften(102,103), die im zusammengebauten Zustand eine Durchlassöffnung umschließen und in Einbaulage an einer Komponente (101) anliegen können, die durch die Durchlassöffnung (108) geführt werden kann, wobei die Dämpferhälften korrespondierende Rastmittel (114,118) aufweisen, die ein Anbringen des Schwingungsdämpfers (100) an der Komponente (101) gestatten, wobei jede Dämpferhälfte (102,103) jeweils einen langen und einen kurzen Kragen (112,113) aufweist, die im zusammengebauten Zustand des Schwingungsdämpfers an gegenüberliegenden Enden des Schwingungsdämpfers angeordnet sind, **dadurch gekennzeichnet, dass** der lange Kragen (113) in axialer Richtung des Schwingungsdämpfers länger als der kurze Kragen (112) ist, dass im zusammengebauten Zustand des Schwingungsdämpfers jeweils ein langer und ein kurzer Kragen (112,113) aneinander anliegen und dass in dem langen Kragen (113) zwei einander gegenüberliegende Durchbrüche (117) ausgebildet sind.

2. Schwingungsdämpfer nach Anspruch 1, **dadurch gekennzeichnet, dass** die an den Dämpferhälften (102,103) angeordnete Kragen (112,113) ein und vorzugsweise zwei Rastöffnungen (118) aufweisen.

3. Schwingungsdämpfer nach Anspruch 1 oder 2, **dadurch gekennzeichnet, dass** an dem langen Kragen (113) Rasthaken (114) angeordnet sind.

4. Schwingungsdämpfer nach Anspruch 3, **dadurch gekennzeichnet, dass** im zusammengebauten Zustand des Schwingungsdämpfers (100) die Rasthaken (114) an dem langen Kragen (113) der einen Dämpferhälfte in Rastöffnungen (118) der anderen Dämpferhälfte eingreifen, die in dem kurzen Kragen (112) vorgesehen sind.

5. Schwingungsdämpfer nach einem der vorstehenden Ansprüche, **dadurch gekennzeichnet, dass** die Dämpferhälften (102,103) jeweils einen zentralen Abschnitt (111) aufweisen, an dem paarweise Rasthaken (123) und Rastöffnungen (121) vorgesehen sind.

6. Schwingungsdämpfer nach einem der vorstehenden Ansprüche, **dadurch gekennzeichnet, dass** mindestens eine der Dämpferhälften (102) einen Kern (126) aus Metall aufweist, der mit einer Kunststoffumspritzung (127) versehen ist, insbesondere aus thermoplastischem Kunststoff.
